# EUROPÄISCHE PATENTSCHRIFT

(11) **EP 1 233 317 B1**
(45) Veröffentlichungstag und Bekanntmachung des Hinweises auf die Patenterteilung: **18.10.2006**
(21) Anmeldenummer: 02002470.9
(22) Anmeldetag: 01.02.2002
(51) Int. Cl.: G05B 19/409

(54) **Vorrichtung und Verfahren zur Erstellung von Bedienungskomponenten**
Apparatus and method for the creation of user components
Dispositif et méthode pour établir des composants de commande

(30) Priorität: 16.02.2001 DE 10107779; 20.06.2001 DE 10129564
(43) Veröffentlichungstag der Anmeldung: 21.08.2002
(73) Patentinhaber: SIEMENS AKTIENGESELLSCHAFT, 80333 München (DE)
(72) Erfinder: Kiesel, Martin, 91099 Poxdorf (DE); Polz, Andreas, 91056 Erlangen (DE); Trummer, Georg, 92224 Amberg (DE); Wagner, Peter, 91217 Hersbruck (DE)

(56) Entgegenhaltungen:
- DE-U- 29 600 609
- US-A- 5 812 394

## Beschreibung

Die vorliegende Erfindung betrifft ein Verfahren und eine Vorrichtung zur Erstellung von Bedienungskomponenten für Bediengeräte von Automatisierungskomponenten. Insbesondere betrifft die vorliegende Erfindung das Erstellen eines Human-Machine-Interface (HMI) für Steuerungen bzw. Antrieb.

Komplexe Steuerungen werden mit Engineeringsystemen projektiert und programmiert. In einzelnen Engineeringschritten werden Steuerungsgrößen definiert und verknüpft. Die daraus entstehenden Projekte einschließlich der Programme, Konfigurationen, Bilder, Bedien- und Beobachtungsvariablen etc., werden in einer speziellen Datenhaltung hinterlegt. Bei Bedarf werden diese Daten aus der Datenhaltung in die Steuerung bzw. den Antrieb übertragen.

Vielfach sind, nicht nur bei komplexen Steuerungen, Bedien- bzw. HMI-Geräte vorgesehen, mit denen die Steuerungen anwenderfreundlich bedient werden können. Die HMI-Geräte dienen dabei zur Visualisierung und Einstellung von relevanten Steuerungsgrößen.

Das Erstellen von HMI-Oberflächen für HMI-Geräte erfordert eine spezielle HMI-Projektierung, wobei die HMI-relevanten Daten aus dem Engineeringsystem, z. B. Bilder, Bedien- und Beobachtungsvariablen, weiterbearbeitet und ggf. angereichert werden. Die damit entstehende HMI-Oberfläche wird in das HMI-Gerät geladen und ermöglicht dem Anwender somit eine praxisgerechte Bedienung der Steuerung bzw. des Antriebs.

Die Erstellung derartiger HMI-Oberflächen ist sehr aufwendig, erfordert unter Umständen Kenntnisse über die Datenstruktur des Engineeringsystems und erfordert in der Regel auch eine Schnittstelle zu den vom Engineeringsystem generierten Daten. Darüber hinaus ist bei Updates des Engineeringsystems bzw. der Steuerungen dafür zu sorgen, dass die HMI-Oberflächen konsistent mitgeändert werden.

Aus dem US-Patent 5,812,394 ist ein Engineeringsystem bekannt, in welchem Steuerprogramme schaubildartig zusammengesetzt werden. Wegen der Verwendung von Schaubildern ist die Erzeugung einer HMI-Oberfläche durch einen Ingenieur nur noch eine Nebensache.

Aus dem Gebrauchsmuster DE 296 00 609 U1 ist ein Automatisierungsgerät bekannt, mit dem ein Steuerprogramm betrieben wird. Ferner ist zusätzlich ein Bedien- und Beobachtungsgerät beschrieben, in dem Bildobjekte verarbeitet werden, die zu Softwarefunktionsbausteinen eines Steuerprogramms in Beziehung stehen, wie es auf dem Automatisierungsgerät ablaufen kann.

Die Aufgabe der vorliegenden Erfindung besteht somit darin, das Erstellen von HMI-Oberflächen zu vereinfachen.

Erfindungsgemäß wird diese Aufgabe gelöst durch ein Verfahren zum Erstellung von Bedienungskomponenten für Bediengeräte von Automatisierungskomponenten, durch Engineering einer Automatisierungskomponente durch mehrere Engeneeringschritte in einem Enineeringsystem, Anbieten von einem oder mehreren Projektierschritten für eine Bedienungskomponente bei einem oder mehreren der Engineeringschritte durch das Engineeringsystem, Speichern von von dem Engineeringsystem erzeugten Daten einschließlich von den zu den Projektschritten gehörigen Bedienungskomponentendaten in einer mit dem Engineeringsystem und einer Projektiereinrichtung verbundenen Datenhaltung und Zusammenstellen der Bedienungskomponente anhand der in der Datenhaltung gespeicherten Daten mit Hilfe der Projektiereinrichtung.

Ferner wird die oben genannte Aufgabe gelöst durch eine Vorrichtung zur Parametrierung, Inbetriebnahme und Programmierung von Steuerungen mit einer Engineeringeinrichtung zur Bereitstellung von die Parametrierung, Inbetriebnahme und/oder Programmierung betreffenden Engineeringschritten für einen Bediener, wobei mit der Engineeringeinrichtung Bedienungskomponenten für Bediengeräte von Automatisierungskomponenten erstellbar sind, indem das Engineeringsystem dazu ausgelegt ist, einen oder mehrere Projektierschritte für eine Bedienungskomponente bei einem oder mehreren der Engineeringschritte anzubieten, und die Engineeringeinrichtung dazu ausgelegt ist, von ihm erzeugte Daten einschließlich von zu den Projektierschritten gehörigen Bedienungskomponentendaten in einer Datenhaltung abzuspeichern, wobei auch eine Projektiereinrichtung bereitgestellt ist, die mit der Datenhaltung verbunden ist, und wobei die Projektiereinrichtung dazu ausgelegt ist, die Bedienungskomponente anhand der in der Datenhaltung gespeicherten Daten zusammenzustellen.

Vorteilhafte Weiterbildungen der Erfindung ergeben sich aus den Unteransprüchen.

Die vorliegende Erfindung gestattet damit, dass durch einfache Bedienhandlungen oder automatisiert im normalen Engineering die HMI-Information miterzeugt wird, wobei das im Engineeringsystem vorhandene Technologiewissen für die Erzeugung von technologieorientierten HMI-Komponenten genutzt werden kann.

Anhand der beigefügten Zeichnungen wird nun die vorliegende Erfindung näher erläutert. In ihnen zeigen:
Fig. 1 eine mögliche Konfiguration der datentechnischen Verschaltung eines erfindungsgemäßen Systems; und
Fig. 2 eine Variante der Konfiguration von Fig. 1 mit spezieller HMI-Datenhaltung.

Das nachfolgend beschriebene Ausführungsbeispiel stellt eine bevorzugte Ausführungsform der vorliegenden Erfindung dar.

Aus dem normalen Engineeringprozess im Engineeringsystem werden HMI-Daten für eine HMI-Oberfläche abgeleitet. Dies bedeutet, dass in den Vorgang für Inbetriebnahme, Projektierung und Programmierung einer Automatisierungskomponente die Erzeugung relevanter HMI-Daten integriert wird, so dass durch einfache Bedienhandlungen oder automatisiert im normalen Engineering die HMI-Informationen miterzeugt werden. Damit werden zwei Prozesse, der Engineeringprozess und der Erstellungsprozess für HMI-Oberflächen, zu einem Prozess zusammengefasst.

Erfindungsgemäß erfolgt das Erzeugen der HMI-Daten beim Engineering im Kontext des entsprechenden Engineeringschritts. Beispielsweise können bei der Inbetriebnahme einer Steuerung die relevanten HMI-Größen festgelegt werden. Dabei können einzelne Variablen als HMI-relevant gekennzeichnet werden. Ferner können während des Engineeringschritts ganze HMI-Bilder projektiert oder importiert werden.

Bei der Programmierung von Automatisierungskomponenten können bereits relevante HMI-Größen definiert werden. Bei der Erstellung der Maschinenanwendung werden dann die relevanten Größen für die Maschinenbedienung bzw. für ein Servicebild festgelegt.

Durch die Erstellung der HMI-Oberfläche während des Engineering-Vorgangs kann in vorteilhafterweise das im Engineeringsystem bereits hinterlegte Technologiewissen für die Erzeugung technologieorientierter HMI-Darstellungen oder HMI-Funktionalitäten genutzt werden. So kann beispielsweise eine Achsübersicht unmittelbar aus dem Engineeringsystem für die HMI-Oberfläche zur Verfügung gestellt werden.

Die relevanten HMI-Daten können optional im XML- oder HTML-Format oder in einem anderen für Standard-Internet-Clients lesbaren Format abgelegt werden. Dies hat den Vorteil, dass derartige HMI-Daten bzw. -Oberflächen auch für externe Standardtools zur Verfügung stehen, wodurch der Einsatzbereich und die Flexibilität von HMI-Bedienkomponenten erhöht wird.

Optional kann der Bediener eine HMI-Oberfläche im Engineeringsystem individuell nachkonfigurieren. So kann der Bediener, falls gewünscht, z. B. Ist-Daten über Stückzahlen auf seinem HMI-Gerät einblenden lassen. Darüber hinaus kann der Bediener beispielsweise eine individuelle Graphik oder aktuelle Kamerabilder von Maschinenteilen in die HMI-Oberfläche einbinden.

Ferner kann die Bedienung der Funktionalitäten mit Standard-browsern erfolgen, die individuell in das HMI-Gerät eingebunden werden können.

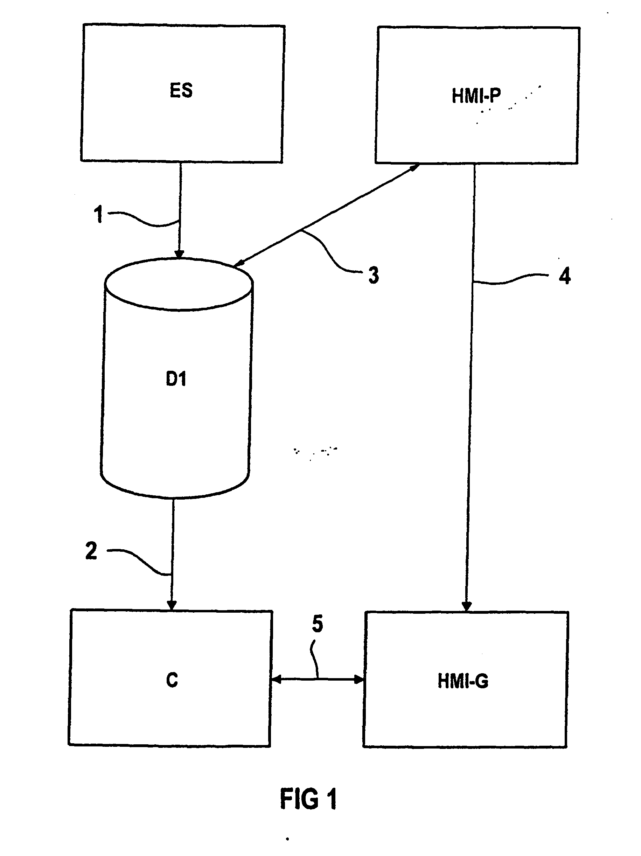

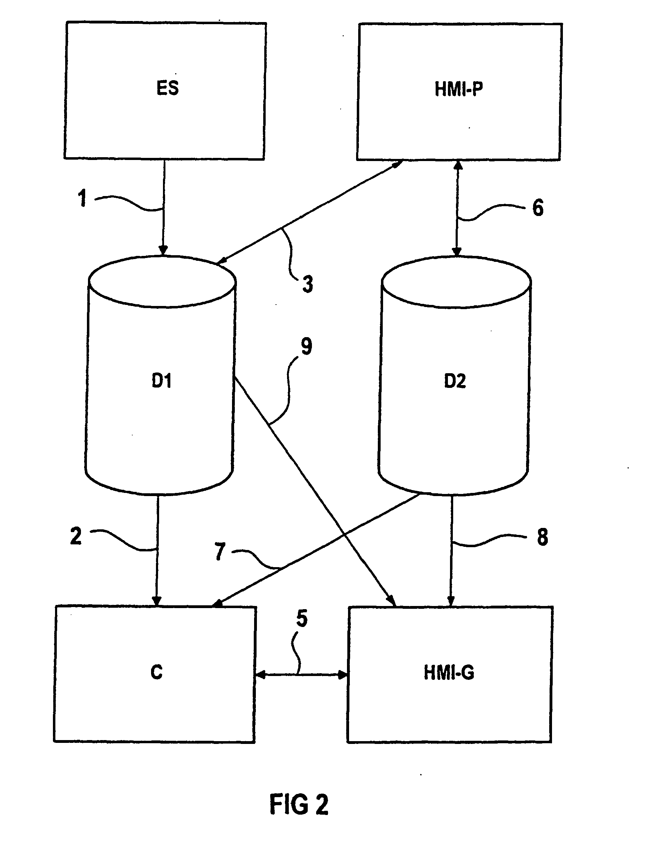

Im Folgenden sei die datentechnische Verschaltung der betroffenen Komponenten anhand der Fig. 1 und 2 erläutert.

Fig. 1 zeigt ein Engineeringsystem ES, das zur Konfiguration, Programmierung und Inbetriebnahme dient. Erfindungsgemäß umfasst das Engineeringsystem ES neben den üblichen Funktionalitäten auch eine Funktionalität zur Erstellung von HMI-Oberflächen. Die von dem Engineeringsystem ES generierten Daten werden entsprechend einem Pfad 1 in einer Datenhaltung D1 hinterlegt. Dabei werden neben den üblichen Konfigurations- und Programmdaten auch spezielle HMI-Daten, wie Bilder, Bedien- und Beobachtungsvariablen etc., in der Datenhaltung 1 abgespeichert. Aus der Datenhaltung 1 werden die Konfigurations- und Progammdaten entsprechend einem Pfad 2 in eine Steuerung bzw. einen Antrieb C geladen.

Ein HMI-Projektierungstool HMI-P greift über eine Schnittstelle 3 auf die HMI-Daten der Datenhaltung D1 zu. Alternativ dazu können die für HMI relevanten Daten über einen expliziten Vorgang (z. B. Export) extrahiert wurden. Zur HMI-Projektierung stehen aber auch die Konfigurations- und Programmdaten des Engineeringsystems ES zur Verfügung. Die Datenhaltung D1 stellt somit eine gemeinsame Datenbank für das Engineeringsystem ES und das HMI-Projektierungstool HMI-P dar. Dies bedeutet aber auch, dass über die Import/Export-Schnittstelle 3 Daten der HMI-Projektierung in der Datenhaltung D1 abgelegt oder extrahiert werden können.

Nach der Anreicherung bzw. Weiterverarbeitung der vom Engineeringsystem ES stammenden HMI-Komponenten im HMI-Projektierungstool HMI-P werden diese Daten über einen Pfad 4 in ein HMI-Gerät HMI-G geladen. Dem Bediener steht damit eine HMI-Oberfläche zum Bedienen und Beobachten der Steuerung C zur Verfügung. Der entsprechende Datenaustausch zwischen HMI-Gerät HMI-G und Steuerung C erfolgt über eine bidirektionale Fest- oder Funkverbindung 5.

Fig. 2 stellt eine erweiterte Konfiguration des erfindungsgemäßen Steuerungssystems dar. Zusätzlich zu dem in Fig. 1 dargestellten System ist eine zweite Datenhaltung D2 vorgesehen. Die übrigen Komponenten mit Ausnahme der neuen Datenpfade 6, 7, 8 und 9 entsprechen denen von Fig. 1 auch hinsichtlich ihrer Funktionalität.

Gemäß Fig. 2 hat nun das HMI-Projektierungstool HMI-P die Möglichkeit, HMI-Projektierungsdaten bzw. HMI-Oberflächen ggf. in einem speziellen Format, z. B. HTML oder XML, in der separaten Datenhaltung D2 zu hinterlegen. Die Datenhaltung D2 kann dann neben dem HMI-Projektierungstool HMI-P über den Pfad 6 auch die Steuerung C über einen Pfad 7 oder das HMI-Gerät HMI-G über einen Pfad 8 mit entsprechenden HMI-Daten bedienen. Darüber hinaus besteht die Möglichkeit, dass das HMI-Gerät HMI-G direkt von der Datenhaltung D1 HMI-Daten über einen Pfad 9 abgreift.

Somit stehen dem HMI-Gerät HMI-G die Daten aus der Datenhaltung D1 über folgende Pfade zur Verfügung:
1. Pfad 2-5 mit einer Zwischenspeicherung der Daten in der Steuerung C,
2. Pfad 3-4 mit Anreicherung oder weiterer Bearbeitung der Daten im HMI-Projektierungstool HMI-P (vgl. Fig. 1),
3. Pfad 3-6-8 mit Zwischenspeicherung in der zweiten Datenhaltung D2,
4. Pfad 3-6-7-5 mit Zwischenspeicherung in der Datenhaltung D2 und in der Steuerung C, und
5. Pfad 9 als Direktabgriff von der Datenhaltung D1.

Die Ablage der gesamten HMI-Daten kann somit auf der Automatisierungskomponente oder außerhalb der Automatisierungskomponente auf einem HMI-Gerät oder Datenserver erfolgen.

Die Bedienung der Funktionalitäten im HMI-Gerät erfolgt günstigerweise mit Standard-Browsern.

Erfindungsgemäß stellen sich somit folgende Vorteile ein:
- die Erstellung der HMI-Oberflächen ist ganz oder teilweise in das Engineering der Automatisierungssteuerung/-antrieb integriert
- im Userinterface der einzelnen Engineeringschritte Parametrierung, Inbetriebnahme, Programmierung werden die Projektschritte für das HMI mitangeboten,
- aus dem Technologiewissen des Engineeringsystems werden ganze Teile des HMIs abgeleitet z. B. Servicebild mit Achsübersicht, Diagnosebild für einzelne Achsen, Diagnosebild für Automatisierungskomponente (z. B. Auslastung, Speicherbelegung, ...),
- optional Nachbearbeitung/Ergänzung durch externe Tools bzw. Import von zusätzlichen Bildinformationen,
- Konsistenz der HMI-Bilder zur Steuerungsprojektierung,
- Bei Updates der Systemsoftware oder Applikationssoftware der Automatisierungskomponente kann automatisiert (z. B. auf Knopfdruck) eine konsistente HMI-Projektierung erstellt werden. Werden beispielsweise bei einem Update des Engineeringsystems zwei neue Variablen zugefügt oder zwei gelöscht, so wird das HMI automatisch an die neue Variablenzahl angepasst bzw. aktualisiert.

Zusammenfassend ist festzustellen, dass die Erzeugung der HMI-Daten in das normale Engineeringsystem erfindungsgemäß integriert wird. Für die Erstellung der HMI-Daten ist somit kein externes weiteres Entwicklungswerkzeug notwendig. Damit wird die Effizienz und Konsistenz bei der Erstellung von HMI-Oberflächen erheblich gesteigert.

## Patentansprüche

1. Verfahren zum Erstellen von Bedienungskomponenten für Bediengeräte von Automatisierungskomponenten, mit den Schritten:
- Engineering einer Automatisierungskomponente durch mehrere Engineeringschritte in einem Engineeringsystem (ES),
- Anbieten von einem oder mehreren Projektierschritten für eine Bedienungskomponente bei einem oder mehreren der Engineeringschritte durch das Engineeringssystem (ES) und
- Speichern von von dem Engineeringssystem (ES) erzeugten Daten einschließlich von zu den Projektierschritten gehörigen Bedienungskomponentendaten in einer mit dem Engineeringsystem (ES) und einer Projektiereinrichtung (HMI-P) verbundenen Datenhaltung (D1, D2), und
- Zusammenstellen der Bedienungskomponente anhand der in der Datenhaltung (D1, D2) gespeicherten Daten mit Hilfe der Projektiereinrichtung (HMI-P).

2. Verfahren nach Anspruch 1, wobei die Bedienungskomponente eine Human-Maschine-Interface-Oberfläche ist.

3. Verfahren nach Anspruch 1 oder 2, wobei das Anbieten ein Ableiten von Service- und/oder Diagnosebildern aus den Engineeringschritten umfasst.

4. Verfahren nach einem der Ansprüche 1 bis 3, mit einem anschließenden Schritt des Nachbearbeitens oder Ergänzens der Bedienungskomponente durch externe Tools und/oder Import von zusätzlichen Informationen, insbesondere Bildern.

5. Verfahren nach einem der Ansprüche 1 bis 4, mit der wahlweisen Neuerstellung einer konsistenten Bedienungskomponente basierend auf einer bestehenden Bedienungskomponente bei Änderung von einem oder mehreren Engineeringschritten, insbesondere bei deren Updates.

6. Verfahren nach einem der Ansprüche 1 bis 5, wobei das Zusammenstellen der Bedienungskomponente automatisch auf der Grundlage einer Festlegung relevanter Größen durch einen Bediener in den Engineeringschritten erfolgt.

7. Verfahren nach einem der Ansprüche 1 bis 6, wobei Daten für die Bedienungskomponente in einem für standard-Internet-Clients lesbaren Format, insbesondere XML oder HTML, erzeugt und abgelegt werden.

8. Verfahren nach einem der Ansprüche 1 bis 7, wobei Daten für die Bedienungskomponente auf einer Automatisierungskomponente, außerhalb der Automatisierungskomponente auf einem Bediengerät oder auf einem Datenserver abgelegt werden.

9. Vorrichtung zur Parametrierung, Inbetriebnahme und Programmierung von Steuerungen mit einer Engineeringeinrichtung (ES) zur Bereitstellung von die Parametrierung, Inbetriebnahme und/oder Programmierung betreffenden Engineeringschritten für einen Bediener, **dadurch gekennzeich-net**, dass mit der Engineeringeinrichtung (ES) Bedienungskomponenten für Bediengeräte von Automatisierungskomponenten erstellbar sind, indem:
- das Engineeringsystem dazu ausgelegt ist, einen oder mehrere Projektierschritte für eine Bedienungskomponente bei einem oder mehreren der Engineeringschritte anzubieten,
- und die Engineeringeinrichtung dazu ausgelegt ist, von ihm selbst erzeugte Daten einschließlich von zu den Projektierschritten gehörigen Bedienungskomponentendaten in einer Datenhaltung (D1, D2) abzuspeichern, wobei
- auch eine Projektiereinrichtung (HMI-P) bereitgestellt ist, die mit der Datenhaltung (D1, D2) verbunden ist, und wobei
- die Projektiereinrichtung (HMI-P) dazu ausgelegt ist, die Bedienungskomponente anhand der in der Datenhaltung gespeicherten Daten zusammenzustellen.

10. Vorrichtung nach Anspruch 9, wobei die Bedienungskomponente eine Human-Maschine-Interface-Oberfläche ist.

11. Vorrichtung nach Anspruch 9 oder 10, wobei durch die Engineeringeinrichtung für die Bedienungskomponente den Engineeringschritten zu Grunde liegenden Informationen oder Service- und/oder Diagnosebilder aus den Engineeringschritten ableitbar sind.

12. Vorrichtung nach einem der Ansprüche 9 bis 11, wobei die Bedienkomponente durch externe Tools und/oder Import von zusätzlichen Informationen, insbesondere Bildern, nachbearbeitbar ist.

13. Vorrichtung nach einem der Ansprüche 9 bis 12, wobei die Engineeringeinrichtung über eine Konsistenzeinrichtung verfügt, mit der eine konsistente Bedienungskomponente basierend auf Änderungen von einem oder mehreren Engineeringschritten, insbesondere bei deren Updates, aus einer bestehenden Bedienungskomponente automatisch herstellbar ist.

14. Vorrichtung nach einem der Ansprüche 9 bis 13, wobei in der Engineeringeinrichtung relevante Größen für die Bedienungskomponente durch einen Bediener in den Engineeringschritten zusammenstellbar sind.

15. Vorrichtung nach einem der Ansprüche 9 bis 14, wobei Daten für die Bedienungskomponente in einem für standard-Internet-Clients lesbaren Format, insbesondere XML oder HTML, erzeugbar und ablegbar sind.

16. Vorrichtung nach einem der Ansprüche 9 bis 15 mit weiterhin einem Datenserver zur Ablage von Daten der Bedienungskomponente, wobei ein Zugriff auf die Daten einem oder mehreren Bediengeräten gestattet ist

## Claims

1. Method for generating operating components for operating devices of automation components, having the following steps:
- engineering an automation component by means of a plurality of engineering steps in an engineering system (ES),
- the engineering system (ES) offering one or more design steps for an operating component in the case of one or more of the engineering steps, and
- storing data generated by the engineering system (ES), including operating component data belonging to the design steps, in a database (D1, D2) connected to the engineering system (ES) and a design device (HMI-P), and
- assembling the operating component with the aid of the data stored in the database (D1, D2) with the aid of the design device (HMI-P).

2. Method according to Claim 1, in which the operating component is a human machine interface surface.

3. Method according to Claim 1 or 2, in which the offering comprises deriving servicing and/or diagnostic images from the engineering steps.

4. Method according to one of Claims 1 to 3 having a subsequent step in which the operating component is post-processed or supplemented by means of external tools and/or importation of additional information, in particular images.

5. Method according to one of Claims 1 to 4 having optional regeneration of a consistent operating component based on an existing operating component in the event of a change in one or more of the engineering steps, in particular in the event of their updating.

6. Method according to one of Claims 1 to 5, in which the assembly of the operating component is performed automatically on the basis of a determination of relevant variables by an operator in the engineering steps.

7. Method according to one of Claims 1 to 6, in which data for the operating component are generated and stored in a format readable to standard Internet clients, in particular XML or HTML.

8. Method according to one of Claims 1 to 7, in which data for the operating component are stored on an automation component, outside the automation component, on an operating device or on a data server.

9. Device for parametrizing, commissioning and programming controllers, having an engineering device (ES) for the purpose of providing for an operator the engineering steps relating to parametrization, commissioning and/or programming, **characterized in that** the engineering device (ES) can be used to set operating components for operating devices of automation components by:
- the engineering system being designed to offer one or more design steps for an operating component in the case of one or more of the engineering steps,
- and the engineering device being designed to store data generated by itself, including operating component data belonging to the design steps, in a database (D1, D2),
- a design device (HMI-P) which is connected to the database (D1, D2) also being provided, and
- the design device (HMI-P) being designed to assemble the operating component with the aid of the data stored in the database.

10. Device according to Claim 9, in which the operating component is a human machine interface surface.

11. Device according to Claim 9 or 10, in which the engineering device can be used to derive for the operating component from the engineering steps information or servicing and/or diagnostic images on which the engineering steps are based.

12. Device according to one of Claims 9 to 11, in which the operating component can be post-processed by means of external tools and/or importation of additional information, in particular images.

13. Device according to one of Claims 9 to 12, in which the engineering device has a consistency device with the aid of which it is possible to produce automatically from an existing operating component a consistent operating component based on changes in one or more engineering steps, in particular in the case of their updating.

14. Device according to one of Claims 9 to 13, in which relevant variables for the operating component can be assembled in the engineering device by an operator in the engineering steps.

15. Device according to one of Claims 9 to 14, in which data for the operating component can be generated and stored in a format readable to standard Internet clients, in particular XML or HTML.

16. Device according to one of Claims 9 to 15 further having a data server for storing data of the operating component, access being granted to the data of one or more operating devices.

## Revendications

1. Procédé de création de composants de commande d'appareils de commande par des composants d'automatisation, dans lequel :
- on conçoit un composant d'automatisation en plusieurs étapes de conception dans un système de conception (ES),
- on propose une ou plusieurs étapes de projection d'un composant de commande dans le cas d'une ou plusieurs étapes de conception par le système de conception (ES) et
- on mémorise des données, générées par le système de conception (ES), y compris des données de composant de commande appartenant aux étapes de projection dans un support de données (D1, D2) relié au système de conception (ES) et à un dispositif de projection (HMI-P), et
- on rassemble le composant de commande au moyen des données mémorisées dans le support de données (D1, D2) à l'aide du dispositif de projection (HMI-P).

2. Procédé selon la revendication 1, dans lequel le composant de commande est une interface homme/machine.

3. Procédé selon la revendication 1 ou 2, dans lequel la proposition comporte une déduction d'images de service et/ou de diagnostic des étapes de conception.

4. Procédé selon l'une des revendications 1 à 3, comportant une étape suivante dans laquelle on effectue le traitement ultérieur ou on compléte le composant de commande par des outils extérieurs et/ou par l'importation d'informations supplémentaires, notamment d'images.

5. Procédé selon l'une des revendications 1 à 4, dans lequel on renouvelle de façon sélective un composant de commande cohérent en se fondant sur un composant de commande existant lors de la modification d'une ou plusieurs étapes de conception, notamment lors de leur mise à jour.

6. Procédé selon l'une des revendications 1 à 5, dans lequel le rassemblement des composants de commande est effectué automatiquement par un utilisateur dans les étapes de conception en se fondant sur une détermination de grandeurs significatives.

7. Procédé selon l'une des revendications 1 à 6, dans lequel des données destinées aux composants de commande sont générées et mémoriser dans un format lisible par des Standard-Internet-Clients, notamment XML ou HTML.

8. Procédé selon l'une des revendications 1 à 7, dans lequel des données destinées à des composants de commande sont mémorisées sur un composant d'automatisation, en dehors du composant d'automatisation sur un appareil de commande ou sur un serveur de données.

9. Dispositif de paramétrage, de mise en service et de programmation de commandes au moyen d'un dispositif de conception (ES) destiné à préparer des étapes de conception concernant le paramétrage, la mise en service et/ou la programmation à destination d'un utilisateur, **caractérisé en ce que** le dispositif de conception (ES) permet de créer des composants de commande d'appareils de commande à partir de composants d'automatisation :
- le système de conception étant étudié pour proposer une ou plusieurs étapes de projection d'un composant de commande dans le cas d'une ou plusieurs étapes de conception,
- et le dispositif de conception étant conçu pour mémoriser des données, générées par lui-même, y compris des données de composant de commande appartenant aux étapes de projection, dans un support de données (D1, D2),
- un dispositif de projection (HMI-P), qui est relié au support de données (D1, D2), étant également mis à disposition et
- le dispositif de projection étant conçu pour rassembler le composant de commande en se référant aux données mémorisées dans le support de données.

10. Dispositif selon la revendication 9, dans lequel le composant de commande est une interface homme/machine.

11. Dispositif selon la revendication 9 ou 10, dans lequel le dispositif de conception du composant de commande permet de déduire à partir des étapes de conception des images de service et/ou de diagnostic ou des informations à la base des étapes de conception.

12. Dispositif selon l'une des revendications 9 à 11, dans lequel le composant de commande est soumis à un traitement ultérieur par des outils extérieurs et/ou par l'importation d'informations supplémentaires, notamment d'images.

13. Dispositif selon l'une des revendications 9 à 12, dans lequel le dispositif de conception dispose d'un dispositif de cohérence permettant de réaliser automatiquement un composant de commande cohérent en se fondant sur des modifications d'une ou plusieurs étapes de conception, notamment lors de leur mise à jour, à partir d'un composant de commande existant.

14. Dispositif selon l'une des revendications 9 à 13, dans lequel, dans le dispositif de conception, des grandeurs significatives du composant de commande peuvent être assemblées par un utilisateur dans les étapes de conception.

15. Dispositif selon l'une des revendications 9 à 14, dans lequel des données destinées au composant de commande peuvent être générées et mémorisées dans un format lisible par des Standard-Internet-Clients, notamment XML ou HTML.

16. Dispositif selon l'une des revendications 9 à 15, ledit dispositif comportant en outre un serveur de données destiné à mémoriser des données du composant de commande, un ou plusieurs appareils de commande étant autorisés à accéder aux données.
